# EUROPEAN PATENT SPECIFICATION

(11) **EP 1 177 672 B1**
(45) Date of publication and mention of the grant of the patent: **17.12.2008**
(21) Application number: 00929978.5
(22) Date of filing: 19.04.2000
(51) Int. Cl.: H04M 3/42, H04Q 7/38

(54) **A METHOD AND SYSTEM OF BANDWIDTH OPTIMISATION WHEN MENU-BASED VALUE ADDED SERVICES ARE OFFERED TO SUBSCRIBERS VIA NARROW BAND RADIO CHANNELS**
VERFAHREN UND SYSTEM ZUR BANDBREITE OPTIEMIERUNG WENN MENUGEFÜHRTEN MEHRWERTDIENSTEM AN TEILNEHMERN ANGEBOTEN WERDEN DURCH SCHMALBANDIGEN FUNKKANÄLEN
PROCEDE ET SYSTEME POUR L'OPTIMISATION DE L'UTILISATION DE LA BANDE LORSQUE DES SERVICES A VALEUR AJOUTEE PILOTES PAR MENU SONT PROPOSES A DES ABONNES PAR DES VOIES D'EMISSION RADIO A BANDE ETROITE

(30) Priority: 27.04.1999 SE 9901507
(43) Date of publication of application: 06.02.2002
(73) Proprietor: TELIASONERA AB, 106 63 Stockholm (SE)
(72) Inventor: ANDERSSON, Annette, S-653 50 Karlstad (SE); BLOMKVIST, Hakan, S-653 50 Karlstad (SE); EMILSSON, Stellan, S-655 94 Karlstad (SE); GUSTAFSSON, Jan, S-653 30 Karlstad (SE)
(74) Representative: Hopfgarten, Nils
(86) International application number: PCT/SE2000/000749
(87) International publication number: WO 2000/065810

(56) References cited:
- EP-A2- 0 911 607
- WO-A2-99/38338
- WO-A2-99/63767

## Description

The present invention relates to a telecommunications system, adapted to optimise utilisation of bandwidth when menu-based services are offered to system users via narrow-band radio channels of the system, a service platform for use with the system, subscriber terminals for use with the system, and a method of bandwidth optimisation in mobile telephony.

With mobile telephony, there is always a need to optimise utilisation of the radio resource. The more effectively the radio resource can be utilised, the greater will be the opportunities for an operator to create profitable services, i.e. more services can be operated in parallel on the same bandwidth. Effective utilisation of the radio resource will also imply shorter times to load, or use, services, which will make the services more attractive.

When a menu-based service is downloaded to a mobile telephone terminal, for example, a mobile telephone station, or handset, via a radio link, it is also necessary to transmit information to be used in the mobile telephone terminal when different services are to be called, for example, menu texts, service addresses, etc., which must be called by making a choice from a menu. For example, in GSM (Global System for Mobile Communications) the menu-based service may be downloaded via SMS (Short Message Service). The implications of this are that the radio resource will be unnecessarily loaded and, moreover, the time for downloading a menu-based service will become unnecessarily long.

It is an object of the present invention to provide a telecommunications system, which is adapted to optimise utilisation of bandwidth when menu-based services are offered to system users via narrow-band radio channels of the system, i.e. avoid unnecessary loading of the radio resource and reduce the time for downloading a menu-based service by downloading a data structure in place of an executable code to a mobile telephone terminal.

It is another object of the present invention to provide a service platform for use with the telecommunication system.

It is another object of the present invention to provide mobile telephone terminals, for use by subscribers, with the telecommunications system.

It is another object of the present invention to provide a method of bandwidth optimisation in mobile telephony.

The present invention may be used as a freestanding technology, but may also be included as a component in the invention covered by our co-pending patent publication EP1180295, that provides a system architecture, adapted to facilitate the provision of services to mobile telephone subscribers, which simplifies the introduction of new services, and which is based, at least in part, on the inventive concepts in:
Our co-pending patent publication WO 9963767 relating to the effective updating of service logic in mobile telephones. This patent application describes how menu-based services can be downloaded in the form of a data structure instead of downloading an executable code. This makes it practical to distribute menu-based services to a mobile telephone in an effective manner. The invention covered by this co-pending patent application represents a supplementary solution which further streamlines the technology. The volume of information which needs to be transmitted when:
   (-) a menu-based service is downloaded to a mobile telephone station/handset; and
   (-) a service is called from a mobile telephone station/handset,
   are reduced trough application of the invention covered by this our copending patent application.
Our co-pending patent publication EP 1181804 relating to subscriber controlled personalisation of mobile services. This patent application is concerned with the manner in which a subscriber can tailor calls to different services by using an Internet-connected PC to enter values for the parameters to be included when a service is called. In accordance with the invention covered by this application, a subscriber is able to create his, or her, own menu structure via an Internet-connected personal computer (PC), which can then be downloaded to the mobile telephone (see WO 9963767) and with whose help services from different service providers can be called.
Our co-pending patent publication WO 0065812 relating to effective registration and provision of new value added mobile services, and the personalising of such services. This patent application is concerned with the manner in which a service provider can register a new value added service with an operator, which implies that the service provider sends information on the service in a specific format. A new value added service, offered by way of a service provider's server, is registered with the operator's server by transmitting service description data describing the service to the operator's server. The service description data includes a call address for use by the operator's server when executing the service

The system architecture of our co-pending patent publicationEP 1180295 also permits subscribers to control the personalisation of the services which they use, and rapidly distribute user interfaces, in the form of menus, to mobile telephone terminals, so that it is possible to create more interactive and user-friendly services. Furthermore, since the system architecture permits a subscriber to modify the personalisation of services using a personal computer (PC) operating over, for example, the Internet, this architecture reduces the use of radio resource.

According to a first aspect of the present invention, there is provided, a telecommunications system, adapted to optimise utilisation of bandwidth when menu-based value added services are offered to subscribers via narrow band radio channels of the system, comprising a telecommunications operator's server, a plurality of mobile telephone terminals, at least one service provider's server and data storage means, said operator's server being adapted to communicate with said plurality of mobile telephone terminals, said at least one service provider's server and said data storage means, characterised in that said operator's server is adapted to download a menu-based value added service, together with a unique identity for said menu-based value added service, to a mobile telephone terminal in the form of a data structure, instead of an executable code.

The operator's server may be adapted to download a service menu to said mobile telephone terminal in the form of a data structure by means of which a tree structure can be unambiguously described.

The telecommunications system may be adapted to make available a function for creating unique identities for all menu-based value added services, an unambiguous algorithm for application to said menu-based value added services, which results in different menu choices, directly coupled to a service call, being assigned different menu choice references.

The menu choice references may be represented by the leaves of a tree structure.

The telecommunications system may be adapted to provide said unambiguous algorithm by numbering the leaves of said tree structure, each of said numbered leaves being representative of a separate one of said menu choices.
The telecommunications system may be adapted to unambiguously couple a unique service menu identity, together with a menu choice reference, to a specific service call.

The operator's server may be adapted to send a message to the said function when a subscriber choses a value added service via a menu structure in the subscriber's mobile telephone terminal, said function having access to menu tables for all value added services offered by said system, and the said function may be adapted to translate the service menu identity and menu choice reference into a service call and execute the service call.

A service menu table may be adapted to describe a coupling between a menu choice and a call for a related service.

The storage means may include a service data base and a database of services personalised by subscribers.

The said at least one service provider's server may be adapted to provide new value added services for subscribers, and to register said services with said operator's server by transmitting information describing each service to said operator's server.

The telecommunications system may include a plurality of service provider's servers each of which is adapted to provide and register value added service for subscribers.

The operator's server is adapted to receive data defining subscriber customised menus and menu structures, store said menus and menu structures on said database of services personalised by a subscriber and, on request for a service from a subscriber, download menus and menu structures, specific to said subscriber and said service, to said subscriber's mobile telephone terminal.

The operator's server may be adapted to use a service menu's identity, on receipt thereof, as a search word for searching said database of services personalised by a subscriber and extracting, therefrom, a service identity and parameters for that service previously set by a subscriber.

The telecommunications system may be adapted to offer said menu-based value added service to subscribers using cell broadcasting.

According to a second aspect of the present invention, there is provided, telecommunications service platform for the provision of value added services to mobile telephone terminals for use with a telecommunications system, as outlined in preceding paragraphs, characterised in that there is provided a telecommunications operator's server adapted to operate connections to a plurality of mobile telephone terminals, at least one service provider's server and a data storage means, and in that said storage means contain a service data base and a database of services personalised by subscribers.

According to a third aspect of the present invention, there is provided, a mobile telephone terminal, characterised in that said mobile telephone terminal is adapted to operate with a telecommunications system, as outlined in preceding paragraphs.

According to a fourth aspect of the present invention, there is provided, a method of bandwidth optimisation in a telecommunications system, when menu-based value added services are offered to subscribers via narrow band radio channels of the system, said telecommunications system comprising a telecommunications operator's server, adapted to communicate with a plurality of mobile telephone terminals, at least one service provider's server and data storage means, characterised by said operator's server downloading a menu-based value added service, together with a unique identity for said menu-based value added service, to a mobile telephone terminal in the form of a data structure, instead of an executable code.

The method may be characterised by said operator's server downloading a service menu to said mobile telephone terminal in the form of a data structure by means of which a tree structure can be unambiguously described.

The method may be characterised by said system making available a function for creating unique identities for all menu-based value added services, and an unambiguous algorithm for application to said menu-based value added services, which results in different menu choices, directly coupled to a service call, being assigned different menu choice references.

The method may be characterised by representing said menu choice references by the leaves of a tree structure.

The method may be characterised by providing said unambiguous algorithm by numbering the leaves of said tree structure, and by each of said numbered leaves being representative of a separate one of said menu choices.

The method may be characterised by unambiguously coupling a unique service menu identity, together with a menu choice reference, to a specific service call.

The method may be characterised by said operator's server sending a message to the said function when a subscriber choses a value added service via a menu structure in the subscriber's mobile telephone terminal, by said function having access to menu tables for all value added services offered by said system, by said function translating the service menu identity and menu choice reference into a service call and executing the service call.

The method may be characterised in that a service menu table is adapted to describe a coupling between a menu choice and a call for a related service.

The method may be characterised by said storage means including a service data base and a database of services personalised by subscribers.

The method may be characterised by said at least one service provider's server providing new value added services for subscribers, and registering said services with said operator's server by transmitting information describing each service to said operator's server.

The method may be characterised by said system including a plurality of service provider's servers each of which is adapted to provide and register value added service for subscribers.

The method may be characterised by said operator's server receiving data defining subscriber customised menus and menu structures, storing said menus and menu structures on said database of services personalised by a subscriber, and on request for a service from a subscriber, downloading menus and menu structures specific to said subscriber and said service to said subscriber's mobile telephone terminal.

The method may be characterised by said operator's server using a service menu's identity, on receipt thereof, as a search word for searching said database of services personalised by a subscriber, and extracting, therefrom, a service identity and parameters for that service previously set by a subscriber.

The method may be characterised by said menu-based value added servers are offered to subscribers using cell broadcasting.

The foregoing and other features of the present invention will be better understood from the following description with reference to the accompanying drawings, in which:
Figure 1 diagrammatically illustrates, in the form of a block diagram a menu-based service; and
Figure 2 shows a service menu table for a specific service menu identity.

In order to make it easier for a subscriber to use value added mobile services from a conventional mobile telephone terminal, he/she may choose to create his/her own menu structures, where different menu choices are linked to the services he/she has personalised. These menu structures can then be downloaded to the mobile telephone using the invention covered by our co-pending publication WO 9963767 and the present invention. Service providers and operators can also, self-evidently, use the same technology to create service menus which can be offered to a wider group of subscribers. For further details see our co-pending patent publication EP 1181804.

In essence, a subscriber calls a service by communicating with an operator's server and making a menu choice, or by, for example, sending an ordinary SMS (Short Message Service) message containing the name of the personalised service. In both cases, parameters must also be added where the personalised services so require. If a message arrives containing the identity of a service menu and a menu choice reference, it can be used, by the operator's server, as a search word in a database where personalised information is stored. The database call results in the service identity and the values of the service parameters, set when the service was personalised, being retrieved by the operator's server. The retrieved information, together with information retrieved by the operator's server from a service database (includes the call address for the value added service), is used by the operator's server to establish the required service from a service provider's server, which produced and registered the value added service with the operator's server (see our co-pending patent publication WO 0065812). The appropriate service menu is then downloaded to the subscriber's mobile telephone terminal. In the same way as distribution of service menus can be directed to a specific subscriber, it is also possible to distribute service menus to a group of users, for example, via a Cell Broadcast. In this way, subscribers can be offered service menus related to their actual position. That is to say, a service menu with position-related services can be automatically updated depending on the cell in which a subscriber is located. These service menus can be produced in precisely the same way as a subscriber produces his own service menus.

The present invention makes it practicable to distribute menu-based services to a mobile telephone terminal, for example, a mobile telephone station, or handset, in an effective manner by optimising use of the radio resource. In accordance with the present invention, unnecessary loading of the radio resource is avoided and the time for downloading the menu-based service is reduced. This is achieved by the downloading of a data structure in place of an executable code to the mobile telephone terminal. It will be seen from the subsequent description of the present invention that an appropriate function in the network is arranged to create unique identities for all available service menus, and that an algorithm is applied to the service menus so that the different menu choices, directly coupled to a service call, can be assigned different menu choice references.

Thus, in accordance with the present invention, the service menu and its unique identity are downloaded to the mobile telephone terminal in the form of a data structure. In the mobile telephone, the same algorithm, as is used in the network, is applied to the service menu, When a user has chosen a service via the menu structure in the mobile telephone terminal, a message is sent to the function in the network which has access to all service menu tables. The function in the network is thereafter arranged to translate the service menu identity and menu choice reference into a service call and execute the service call.

The present invention, which relates to implicitly referred services, is an extension of the principle described in our co-pending publication WO 9963767 , and represents a supplementary solution which further streamlines downloading of menu-based services to mobile telephone terminals. The present invention is, moreover, not based on calling a service directly from a mobile telephone terminal, but sending, as stated above, a message to a function in the network, a service node, containing a reference to a particular service. In this way, it is possible to simplify a service call from a mobile telephone terminal and then add necessary information in the service node. Use of this method also makes it possible to reduce the information which needs to be sent from the mobile telephone terminal to the network, i.e. the use made of scarce radio resource.

The implementation of a menu-based service in a mobile telephone terminal can be divided into two parts, namely:

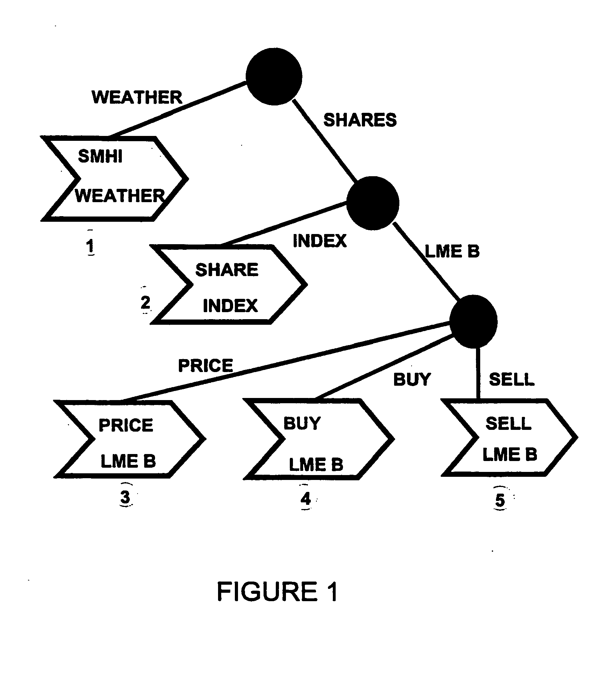

A menu structure (see Figure 1 of the accompanying drawings) at one, or more, levels, which is adapted, in a user-friendly manner, to force the user into making a choice of a specific service. The menu structure of Figure 1 is a service menu, which does not contain a description of how the service is to be called. The provision of a menu choice at different levels creates a user-friendly menu structure, and the menu choice at the lowest level is there to choose a specific service (initiate a service call); and

Implementation of a service call and a coupling to the menu choice directly implying a service call. The service calls are enclosed by arrow-shaped blocks in Figure 1.
Figure 1 illustrates that 'Shares' and 'LME B' are not directly coupled to a call for a service, but are only used to create a user-friendly menu structure.

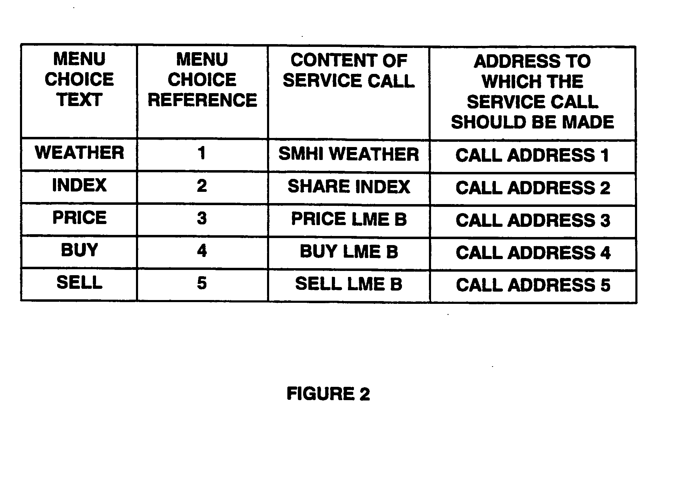

The coupling between menu choice and a service call can be described in the form of a service menu table of the type shown in Figure 2 of the accompanying drawings. The different menu choices, which result In service calls, can be given unique references, for example, numbers, depending on where, in the service menu, the menu choices are located with the aid of an unambiguous algorithm.

When a menu-based service is downloaded to a mobile telephone terminal in the form of an application, or data structure, it contains a description of the service calls, which may involve quite a large volume of information. However, the mobile telephone terminals of a mobile telecommunications system always communicate via a network infrastructure (for example, in the case of GSM and SMS, the communication is transmitted via SMSC), which makes it unnecessary to transmit information on the service calls to the mobile telephone terminal. The service calls downloaded from the network are always returned to the same network when a service is called.

In accordance with the present invention, a saving of both time and downlink bandwidth is achieved when service menus are downloaded to a mobile telephone terminal. In addition, a reduction is also obtained in the volume of information that needs to be sent to the network when a service is called from a mobile telephone terminal.

The present invention is based on the following:

A function in the network creates unique identities for all service menus.

An unambiguous algorithm is applied to the service menu, which results in the different menu choices, directly coupled to service calls, being assigned different menu choice references. Only the menu choices, which are directly coupled to service calls, are of interest. Moreover, these menu choices can be represented by the leaves in a tree structure. A simple algorithm can be realised by numbering the leaves of the tree structure, i.e. if the menu structure is viewed as a tree with the root uppermost (see Figure 1), by numbering the leaves from right to left.

The service menu identity, together with the menu choice reference, can be unambiguously coupled to a specific service call.

The service menu and its unique service menu identity are downloaded to the mobile telephone terminal (i.e. no information on service calls, or menu choice references, are downloaded)_{.} Downloading of the service menu occurs in the form of a data structure by means of which a tree structure can be unambiguously described.

In the mobile telephone terminal, the same algorithm, as in the network, is now applied to the service menu, which means that the menu choices directly coupled to service calls are assigned menu choice references.

When a user has chosen a service via the menu structure in the mobile telephone terminal, a message, containing a service system identity and menu choice reference, is sent to a function in the network, which has access to all service menu tables.

The network function can then translate the service menu identity and menu choice reference into a service call and execute the service call.

It will be directly evident to persons skilled in the art that the present invention may be used in any application where there is a need to save bandwidth and to streamline menu-based services. In particular, the present invention may be used in menu-based mobile telephony services which use narrow-band carrier services, such as, for example, SMS (Short Message Service) in GSM. Thus, in the case of GSM, an advantage of the present invention is that utilisation of SMS can be streamlined.

Further advantages of the present invention are that:

It is possible to download significantly larger menu-based services via, for example, SMS, which may contribute to the creation of interactive menu-based services. A menu choice in a mobile telephone terminal may lead to a new menu-based service being downloaded.

Since the present invention makes it possible to download relatively large menu-based services via a SMS, more robust services can be offered. There is no risk of parts of a menu-based service being lost it a Short Message Service should disappear.

The present invention may be used for SMS Cell Broadcasts, which means that local menu-based services may be effectively offered to users.

Since reference is only made to service calls from the mobile telephone terminal, it becomes possible, with the present invention, 'to make' arbitrarily complex service calls from a mobile telephone terminal, independently of the carrier service used by the mobile telephone terminal.

It will also be directly evident to persons skilled in the art that the present invention is independent of the mobile telephony system (for example, GSM, UMTS, or the like) and the carrier service used in the mobile telephone system to access the services, as well as the terminal technology.

The streamlining of menu-based services, in accordance with the present invention, has not previously been known. A unique feature of the present invention is that information on the services being called by a user via a menu structure need not be downloaded to the mobile telephone terminal, but can be achieved via implicit references to menu choices in different service menus. In order to enable this to become possible, the present invention ensures that the network infrastructure of a mobile telephony system has access to information on the menu structure for all system menus which can be used in the mobile telephone terminal to generate a service call via a menu choice. Thus, the present invention not only includes menu choice references in the menu-based service (service menu) downloaded to the mobile telephone terminal, but also facilitates the provision of such references with the aid of identical algorithms, which are applied to the menu structure both in the mobile telephone terminal and in a function in the network infrastructure.

It will be seen from the foregoing description that the present invention enables bandwidth utilisation to be optimised in a digital mobile telephony system, when menu-based services are offered to users via radio channels with limited bandwidth, i.e. narrow-band radio channels. In addition, the present invention enables network operators to offer subscribers new, interesting and more user-friendly services, and is intended to be used by a network operator having a need to save time and bandwidth in the downlink of a digital mobile telephony system.

The invention may be realised using existing technology, for example, Subscriber Identity Module (SIM) Application Toolkit based technology.

## Claims

1. A telecommunications system, adapted to optimise utilisation of bandwidth when menu-based value added services are offered to subscribers via narrow band radio channels of the system, comprising a telecommunications operator's server, a plurality of mobile telephone terminals, at least one service provider's server and data storage means, said operator's server being adapted to communicate with said plurality of mobile telephone terminals, said at least one service provider's server and said data storage means,
**characterised in that**
said operator's server is adapted to download a menu-based value added service (1-5), together with a unique identity for said menu-based value added service, to a mobile telephone terminal in the form of a data structure (figure 1), instead of an executable code.

2. A telecommunications system, as claimed in claim 1, **characterised in that** said operator's server is adapted to download a service menu to said mobile telephone terminal in the form of a data structure (figure 1) by means of which a tree structure can be unambiguously describes.

3. A telecommunications system, as claimed in claims 1, or claim 2, **characterised in that** said system is adapted to make available:
- a function for creating unique identities for all menu-based value added services; and
- an unambiguous algorithm for application to said menu-based value added services, which results in different menu choices, directly coupled to a service call, being assigned different menu choice references (1-5).

4. A telecommunications system, as claimed in claim 3, **characterised in that** said menu choice references are represented by the leaves (1-5) of a tree structure (figure 1).

5. A telecommunications system, as claimed in claim 4, **characterised in that** said system is adapted to provide said unambiguous algorithm by numbering the leaves (1-5) of said tree structure, each of said numbered leaves being representative of a separate one of said menu choices.

6. A telecommunications system, as claimed in any of claims 3 to 5, **characterised in that** said system is adapted to unambiguously couple a unique service menu identity, together with a menu choice reference (1-5), to a specific service call.

7. A telecommunications system, as claimed in any of claims 3 to 6, **characterised in that** said operator's server is adapted to send a message to the said function when a subscriber choses a value added service via a menu structure in the subscriber's mobile telephone terminal, said function having access to menu tables (figure 2) for all value added services offered by said system, and that said function is adapted to translate the service menu identity and menu choice reference (1-5) into a service call and execute the service call.

8. A telecommunications system, as claimed in claim 7, **characterised in that** a service menu table (figure 2) is adapted to describe a coupling between a menu choice and a call for a related service.

9. A telecommunications system, as claimed in any preceding claim, **characterised in that** said storage means include a service data base and a database of services personalised by subscribers.

10. A telecommunications system, as claimed in any preceding claim, **characterised in that** said at least one service provider's server is adapted to provide new value added services (1-5) for subscribers, and to register said services with said operator's server by transmitting information describing each service to said operator's server.

11. A telecommunications system, as claimed in claim10, **characterised in** tha; said system includes a plurality of service provider's servers each of which is adapted to provide and register value added service figure 1 for subscribers.

12. A telecommunications system, as claimed in any claims 9 to 11. **characterised in that** said operator's server is adapted to:
- receive data defining subscriber customised menus and menu structures:
- store said menus and menu structures on said database of services personalised by a subscriber; and
- on request for a service from a subscriber, download menus and menu structures, specific to said subscriber and said service, to said subscriber's mobile telephone terminal.

13. A telecommunications system as claimed in any of claims 9 to 12, **characterised in that** said operator's server adapted to use a service menu's identity, on receipt thereof, as a search word for searching said database of services (figure 1) personalised by a subscriber and extracting; therefrom, a service identity and parameters fcr that service previously set by a subscriber.

14. A telecommunications system, as claimed in any preceding claim, **characterised in that** said system is adapted to offer said menu-based value added service (figure 1) to subscribers using cell broadcasting.

15. A telecommunications service platform for the provision of value added services (figure 1) to mobile telephone terminals for use with a telecommunications system, as claimed in any of claims 1 to 14.

16. A mobile telephone terminal, **characterised in that** said mobile telephone terminal is adapted to operate with a telecommunications system, as claimed in any of claims 1 to 14.

17. A method of bandwidth optimisation in a telecommunications system, when menu-based value added services (1-5) are offered to subscribers via narrow band radio channels of the system, said telecommunications system comprising a telecommunications operator's server, adapted to communicate with a plurality of mobile telephone terminals, at least one service provider's server and data storage means,
**characterised by**
said operator's server downloading a menu-based value added service (1-5), together with a unique identity for said menu-based value added service, to a mobile telephone terminal in the form of a data structure, instead of an executable code.

18. A method, as claimed in claim 17, **characterised by** said operator's server downloading a service menu to said mobile telephone terminal in the form of a data structure (figure 1) by means of which a tree structure can be unambiguously described.

19. A method, as claimed in claim 17, or claim 18, **characterised by** said system making available:
- a function for creating unique identities for all menu-based value added services (1-5) and
- an unambiguous algorithm for application to said menu-based value added services, which results in different menu choices, directly coupled to a service call, being assigned different menu choice references (1-5).

20. A method, as claimed in claim 19, **characterised by** representing said menu choice references by the leaves (1-5) of a tree structure (figure 1).

21. A method, as claimed in claim 20, **characterised by** providing said unambiguous algorithm by numbering the leaves (1-5) of said tree structure, and by each of said numbered leaves being representative of a separate one of said menu choices.

22. A method, as claimed in any of claims 19 to 21, **characterised by** unambiguously coupling a unique service menu identity, together with a menu choice reference (1-5), to a specific service call.

23. A method, as claimed in any of claims 19 to 22. **characterised by** said operator's server sending a message to the said function when a subscriber choses a value added service (1-5) via a menu structure in the subscriber's mobile telephone terminal, by said function having access to menu tables (figure 2) for all value added services offered by said system, by said function translating the service menu identity and menu choice reference (1-5) into a service call and executing the service call.

24. A method, as claimed in claim 23, **characterised in that** a service menu table (figure 2) is adapted to describe a coupling between a menu choice (1-5) and a call for a related service.

25. A method, as claimed in any of claims 17 to 24, **characterised by** said storage means including a service data base and a database of services personalised by subscribers.

26. A method, as claimed in any of claims 17 to 25, **characterised by** said at least one service provider's server providing new value added services (1-5) for subscribers, and registering said services with said operator's server by transmitting information describing each service to said operator's server.

27. A method, as claimed in claim 26, **characterised by** said system including a plurality of service provider's servers each of which is adapted to provide and register value added service (1-5) for subscribers.

28. A method, as claimed in any claims 25 to 27, **characterised by** said operator's server:
- receiving data defining subscriber customised menus and menu structures;
- storing said menus and menu structures on said database of services personalised by a subscriber; and
- on request for a service from a subscriber, downloading menus and menu structures specific to said subscriber and said service to said subscriber's mobile telephone terminal.

29. A method, as claimed in any of claims 25 to 28, **characterised by** said operator's server using a service menu's identity, on receipt thereof, as a search word for searching said database of services personalised by a subscriber, and extracting, therefrom, a service identity and parameters for that service previously set by a subscriber.

30. A method, as claimed in any of claims 17 to 29, **characterised by** said menu based value added servers are offered to subscribers using cell broadcasting.

## Patentansprüche

1. Telekommunikationssystem, das dazu ausgebildet ist, Verwendung von Bandbreite zu optimieren, wenn auf Menüs beruhende Mehrwertdienste Teilnehmern über schmalbandige Funkkanäle des Systems angeboten werden, das einen Server eines Telekommunikationsbetreibers, eine Mehrzahl von mobilen Telefonendgeräten wenigstens einen Server eines Dienstanbieters und Datenspeichermittel aufweist, welcher Server des Betreibers dazu ausgebildet ist, mit der Mehrzahl von mobilen Telefonendgeräten, dem wenigstens einen Server des Dienstanbieters und den Datenspeichermitteln zu kommunizieren,
**dadurch gekennzeichnet, dass**
der Server des Betreibers dazu ausgebildet ist, einen auf Menü beruhenden Mehrwertdienst (1-5) zusammen mit einer einzigartigen Identität für den auf Menü beruhendem Mehrwertdienst zu einem mobilen Telefonendgerät in Form einer Datenstruktur (Fig. 1) anstelle eines ausführbaren Codes herunterzuladen.

2. Telekommunikationssystem nach Anspruch 1, **dadurch gekennzeichnet, dass** der Server des Betreibers dazu ausgebildet ist, ein Dienstmenü zu dem mobilen Telefonendgerät in Form einer Datenstruktur (Fig. 1) herunterzuladen, mit Hilfe dessen eine Baumstruktur unzweideutig beschrieben werden kann.

3. Telekommunikationssystem nach Anspruch 1 oder 2, **dadurch gekennzeichnet, dass** das System dazu ausgebildet ist zur Verfügung zu stellen:
- eine Funktion zum Erzeugen von einzigartigen Identitäten für alle auf Menüs beruhenden Mehrwertdienste; und
- einen unzweideutigen Algorithmus für Anwendung auf die auf Menü beruhenden Mehrwertdienste, was zu unterschiedlichen Menüauswahlen, direkt verbunden mit einem Dienstruf, führt, die unterschiedlichen Menüauswahlreferenzen (1-5) zugeordnet sind.

4. Telekommunikationssystem nach Anspruch 3, **dadurch gekennzeichnet, dass** die Menüauswahlreferenzen durch die Blätter (1-5) einer Baumstruktur (Fig. 1.) dargestellt werden.

5. Telekommunikationssystem nach Anspruch 4, **dadurch gekennzeichnet, dass** das System dazu ausgebildet ist, den unzweideutigen Algorithmus durch Nummerieren der Blätter (1-5) der Baumstruktur zu liefern, wobei jedes der numerierten Blätter repräsentativ für eine separate der Menüauswahlen ist.

6. Telekommunikationssystem nach einem der Ansprüche 3 bis 5, **dadurch gekennzeichnet, dass** das System dazu ausgebildet ist, unzweideutig eine einzigartige Dienstmenüidentität zusammen mit einer Menüauswahlreferenz (1-5) mit einem besonderen Dienstruf zu verbinden.

7. Telekommunikationssystem nach einem der Ansprüche 3 bis 6, **dadurch gekennzeichnet, dass** der Server des Betreibers dazu ausgebildet ist, eine Meldung zu der Funktion zu senden, wenn ein Teilnehmer einen Mehrwertdienst über eine Menüstruktur in dem mobilen Telefonendgerät des Teilnehmers wählt, welche Funktion Zugang zu Menütabellen (Fig. 2) für alle Mehrwertdienste hat, die durch das System angeboten werden, und dass die Funktion dazu ausgebildet ist, die Dienstmenüidentität und die Menüauswahlreferenz (1-5) in einen Dienstruf zu übersetzen und den Dienstruf auszuführen.

8. Telekommunikationssystem nach Anspruch 7, **dadurch gekennzeichnet, dass** eine Dienstmenütabelle (Fig. 2) dazu ausgebildet ist, eine Verbindung zwischen einer Menüauswahl und einem Ruf für einen damit zusammenhängenden Dienst zu beschreiben.

9. Telekommunikationssystem nach einem vorangehenden Anspruch, **dadurch gekennzeichnet, dass** die Speichermittel eine Dienstdatenbank und eine Datenbank von Diensten einschließt, die durch Teilnehmer personalisiert sind.

10. Telekommunikationssystem nach einem vorangehenden Anspruch, **dadurch gekennzeichnet, dass** der wenigstens eine Server eines Dienstanbieters dazu ausgebildet ist, neue Mehrwertdienste (1-5) für Teilnehmer zur Verfügung zu stellen und die Dienste bei dem Server des Betreibers dadurch zu registrieren, indem Information, die jeden Dienst beschreibt, zu dem Server des Betreibers übertragen wird.

11. Telekommunikationssystem nach Anspruch 10, **dadurch gekennzeichnet, dass** das System eine Mehrzahl von Servern von Dienstbanbietern einschließt, von denen jeder dazu ausgebildet ist, Mehrwertdienste (Fig. 1) für Teilnehmer zur Verfügung zu stellen und zu registrieren.

12. Telekommunikationssystem nach einem der Ansprüche 9 bis 11, **dadurch gekennzeichnet, dass** der Server des Betreibers dazu ausgebildet ist:
- Daten zu empfangen, die vom Teilnehmer kundenspezifisch angepasste Menüs und Menüstrukturen definieren;
- die Menüs und Menüstrukturen in der Datenbank von Diensten zu speichern, die durch einen Teilnehmer personalisiert sind, und
- auf Anforderung eines Dienstes von einem Teilnehmer Menüs und Menüstrukturen, die für den Teilnehmer und den Dienst spezifisch sind, auf das mobile Telefonendgerät des Teilnehmers herunterzuladen.

13. Telekommunikationssystem nach einem der Ansprüche 9 bis 12, **dadurch gekennzeichnet, dass** der Server des Betreibers dazu ausgebildet ist, die Identität eines Dienstmenüs beim Empfang derselben als ein Suchwort zum Suchen der Datenbank von Diensten (Fig. 1) zu verwenden, die durch einen Teilnehmer personalisiert sind, und davon eine Dienstidentität und Parameter für den Dienst zu extrahieren, die vorher durch einen Teilnehmer eingestellt sind.

14. Telekommunikationssystem nach einem vorangehenden Anspruch, **dadurch gekennzeichnet, dass** das System dazu ausgebildet ist, die auf Menüs beruhenden Mehrwertdienste (Fig. 1) Teilnehmern unter Verwendung von Zellenrundfunk anzubieten.

15. Telekommunikationsdienstplattform für zur Verfügungstellung von Mehrwertdiensten (Fig. 1) zu mobilen Telefonendgeräten für Verwendung mit einem Telekommunikationssystem nach einem der Ansprüche 1 bis 14.

16. Mobiles Telefonendgerät, **dadurch gekennzeichnet, dass** das mobile Telefonendgerät dazu ausgebildet ist, mit einem Telekommunikationssystem nach einem der Ansprüche 1 bis 14 zu arbeiten.

17. Verfahren der Bandbreiteoptimierung in einem Telekommunikationssystem, wenn auf Menüs beruhende Mehrwertdienste (1-5) Teilnehmern über schmalbandige Funkkanäle des Systems angeboten, werden, welches Telekommunikationssystem einen Server eines Telekommunikationsbetreibers, der dazu ausgebildet ist, mit einer Mehrzahl von mobilen Telefonendgeräten zu kommunizieren, wenigstens einen Server eines Dienstanbieters und Datenspeichermittel aufweiset,
**dadurch gekennzeichnet, dass**
dass der Server des Betreibers einen auf Menüs beruhenden Mehrwertdienst (1-5) zusammen mit einer einzigartigen Identität für den auf Menüs beruhenden Mehrwertdienst zu einem mobilen Telefonendgerät in Form einer Datenstruktur anstelle eines ausführbaren Codes herunterlädt.

18. Verfahren nach Anspruch 17, **dadurch gekennzeichnet, dass** der Server des Betreibers ein Dienstmenü zu dem mobilen Telefonendgerät in Form einer Datenstruktur (Fig. 1) herunterlädt, durch die eine Baumstruktur unzweideutig beschrieben werden kann.

19. Verfahren nach Anspruch 17 oder Anspruch 18, **dadurch gekennzeichnet, dass** das System verfügbar macht:
- eine Funktion zum Erzeugen einzigartiger Identitäten für alle auf Menüs beruhenden Mehrwertdienste (1-5) und
- einen unzweideutigen Algorithmus für Anwendung auf die auf Menüs beruhenden Mehrwertdienste, was dazu führt, dass unterschiedliche Menüauswahlen, die direkt mit einem, Dienstruf verbunden sind, unterschiedlichen Menüauswahlreferenzen (1-5) zugeordnet werden.

20. Verfahren nach Anspruch 19, **dadurch gekennzeichnet, dass** die Menüauswahlreferenzen durch die Blätter (1-5) einer Baumstruktur (Fig. 1) dargestellt werden.

21. Verfahren nach Anspruch 20, **dadurch gekennzeichnet, dass** der unzweideutige Algorithmus durch Nummerieren der Blätter (1-5) der Baumstruktur geliefert wird, und dass jedes der nummerierten Blätter für eine separate der Menüauswahlen repräsentativ ist.

22. Verfahren nach einem der Ansprüche 19 bis 21, **dadurch gekennzeichnet, dass** unzweideutig eine einzigartige Dienstmenüidentität zusammen mit einer Menüauswahlreferenz (1-5) mit einem spezifischen Dienstruf verbunden wird.

23. Verfahren nach einem der Ansprüche 19 bis 22, **dadurch gekennzeichnet, dass** der Server des Betreibers eine Meldung zu der Funktion, wenn der Teilnehmer einen Mehrwertdienst (1-5) wählt, über eine Menüstruktur in dem mobilen Endgerät des Teilnehmers sendet, dass die Funktion Zugang zu Menütabellen (Fig. 2) für alle Mehrwertdienste hat, die durch das System angeboten werden, dass die Funktion die Dienstmenüidentität und Menüauswahlreferenz (1-5) in einen Dienstruf übersetzt und den Dienstruf ausführt.

24. Verfahren nach Anspruch 23, **dadurch gekennzeichnet, dass** eine Dienstmenütabelle (Fig. 2) dazu ausgebildet ist, eine Verbindung zwischen einer Menüauswahl (1-5) und einem Ruf für einen damit zusammenhängenden Dienst zu beschreiben.

25. Verfahren nach einem der Ansprüche 17 bis 24, **dadurch gekennzeichnet, dass** die Speichermittel eine Dienstdatenbank und eine Datenbank von Diensten einschließt, die durch Teilnehmer personalisiert sind.

26. Verfahren nach einem der Ansprüche 17 bis 25, **dadurch gekennzeichnet, dass** der wenigstens eine Server eines Dienstanbieter neue Mehrwertdienste (1-5) für Teilnehmer zur Verfügung stellt und die Dienste bei dem Server des Betreibers registriert, indem Information, die jeden Dienst beschreibt, zu dem Server des Betreibers übertragen wird.

27. Verfahren nach Anspruch 26, **dadurch gekennzeichnet, dass** das System eine Mehrzahl von Servern von Dienstanbietern einschließt, von denen jeder dazu ausgebildet ist, Mehrwertdienste (1-5) für Teilnehmer zur Verfügung zu stellen und zu registrieren.

28. Verfahren nach einem der Ansprüche 25 bis 27, **dadurch gekennzeichnet, dass** der Server des Betreibers:
- Daten empfängt, die vom Teilnehmer kundenspezifisch angepasste Menüs und Menüstrukturen definieren;
- die Menüs und die Menüstrukturen in der Datenbank von Diensten speichert, die durch einen Teilnehmer personalisiert sind; und
- auf Anforderung eines Dienstes von einem Teilnehmer Menüs und Menüstrukturen, die für den Teilnehmer und den Dienst spezifisch sind, zu dem mobilen Telefonendgerät des Teilnehmers herunterzuladen.

29. Verfahren nach einem der Ansprüche 25 bis 28, **dadurch gekennzeichnet, dass** der Server des Betreibers eine Identität eines Dienstmenüs beim Empfang derselben als ein Suchwort zum Suchen der Datenbank von Diensten, die durch einen Teilnehmer personalisiert sind, benutzt und davon eine Dienstidentität und Parameter für den Dienst extrahiert, die vorher durch einen Teilnehmer eingestellt worden sind.

30. Verfahren nach einem der Ansprüche 17 bis 29, **dadurch gekennzeichnet, dass** die auf Menüs beruhenden Mehrwertdienste Teilnehmern unter Verwendung von Zellenrundsendung angeboten werden.

## Revendications

1. Système de télécommunication, prévu pour optimiser l'utilisation de la largeur de bande lorsque des services à valeur ajoutée pilotés par menu sont proposés à des abonnés via des canaux radio à bande étroite du système, comprenant un serveur d'opérateur de télécommunication, une pluralité de terminaux téléphoniques mobiles, au moins un serveur de fournisseur de service et des moyens de stockage de données, le dit serveur d'opérateur étant prévu pour communiquer avec la dite pluralité de terminaux téléphoniques mobiles, le dit au moins un serveur de fournisseur de service et les dits moyens de stockage de données,
**caractérisé en ce que**
le dit serveur d'opérateur est prévu pour télécharger un service à valeur ajoutée piloté par menu (1-5), en même temps qu'une identité unique pour le dit service à valeur ajoutée piloté par menu, sur un terminal téléphonique mobile sous la forme d'une structure de données (figure 1), au lieu d'un code exécutable.

2. Système de télécommunication selon la revendication 1, **caractérisé en ce que** le dit serveur d'opérateur est prévu pour télécharger un menu de services sur le dit terminal téléphonique mobile sous la forme d'une structure de données (figure 1) au moyen de laquelle une arborescence peut être décrite de façon non ambiguë.

3. Système de télécommunication selon la revendication 1 ou la revendication 2, **caractérisé en ce que** le dit système est prévu pour permettre de disposer de:
- une fonction de création d'identités uniques pour tous les services à valeur ajoutée pilotés par menu, et
- un algorithme non ambigu pour application aux dits services à valeur ajoutée pilotés par menu, ce qui résulte **en ce que** différents choix de menu, directement couplés à un appel de service, sont affectés de différentes références de choix de menu (1-5).

4. Système de télécommunication selon la revendication 3, **caractérisé en ce que** les dites références de choix de menu sont représentées par les branches (1-5) d'une arborescence (figure 1).

5. Système de télécommunication selon la revendication 4, **caractérisé en ce que** le dit système est prévu pour fournir le dit algorithme non ambigu par numérotation des branches (1-5) de la dite arborescence, chacune des dites branches numérotées étant représentative d'un choix séparé des dits choix de menu.

6. Système de télécommunication selon une quelconque des revendications 3 à 5, **caractérisé en ce que** le dit système est prévu pour coupler de façon non ambiguë une identité de menu de service unique, en même temps qu'une référence de choix de menu (1-5), à un appel de service spécifique.

7. Système de télécommunication selon une quelconque des revendications 3 à 6, **caractérisé en ce que** le dit serveur d'opérateur est prévu pour envoyer un message à la dite fonction lorsqu'un abonné choisit un service à valeur ajoutée via une structure de menu dans le terminal téléphonique mobile de l'abonné, la dite fonction ayant accès aux tables de menu (figure 2) pour tous les services à valeur ajoutée proposés par le dit système, et **en ce que** la dite fonction est prévue pour traduire l'identité de menu de services et la référence de choix de menu (1-5) en un appel de service et pour exécuter l'appel de service.

8. Système de télécommunication selon la revendication 7, **caractérisé en ce qu'**une table de menus de service (figure 2) est prévue pour décrire un couplage entre un choix de menu et un appel pour un service associé.

9. Système de télécommunication selon une quelconque des revendications précédentes, **caractérisé en ce que** les dits moyens de stockage comprennent une base de données de service et une base de données de services personnalisée par les abonnés.

10. Système de télécommunication selon une quelconque des revendications précédentes, **caractérisé en ce que** le dit au moins un serveur de fournisseur de service est prévu pour fournir de nouveaux services à valeur ajoutée (1-5) pour les abonnés, et pour enregistrer les dits services avec le dit serveur d'opérateur par transmission d'informations décrivant chaque service au dit serveur d'opérateur.

11. Système de télécommunication selon la revendication 10, **caractérisé en ce que** le dit système comprend une pluralité de serveurs de fournisseur de service dont chacun est prévu pour fournir et enregistrer un service à valeur ajoutée (figure 1) pour des abonnés.

12. Système de télécommunication selon une quelconque des revendications 9 à 11, **caractérisé en ce que** le dit serveur d'opérateur est prévu pour :
- recevoir des données définissant des menus personnalisés d'abonné et des structures de menu ;
- stocker les dits menus et structures de menu sur la dite base de données de service personnalisée par un abonné ; et
- sur demande d'un service par un abonné, télécharger des menus et des structures de menu, spécifiques au dit abonné et au dit service, sur le dit terminal téléphonique mobile du dit abonné.

13. Système de télécommunication selon une quelconque des revendications 9 à 12, **caractérisé en ce que** le dit serveur d'opérateur est prévu pour utiliser une identité de menu de service, à réception de celle-ci, comme un mot de recherche pour explorer la dite base de données de services (figure 1) personnalisée par un abonné et en extraire une identité de service et des paramètres pour ce service précédemment établis par un abonné.

14. Système de télécommunication selon une quelconque des revendications précédentes, **caractérisé en ce que** le dit système est prévu pour offrir le dit service à valeur ajoutée piloté par menu (figure 1) à des abonnés au moyen d'une diffusion cellulaire.

15. Plate-forme de service de télécommunication pour la fourniture de services à valeur ajoutée (figure 1) à des terminaux téléphoniques mobiles, pour utilisation avec un système de télécommunication selon une quelconque des revendications 1 à 14.

16. Terminal téléphonique mobile, **caractérisé en ce que** le dit terminal téléphonique mobile est prévu pour fonctionner avec un système de télécommunication selon une quelconque des revendications 1 à 14.

17. Procédé d'optimisation de largeur de bande dans un système de télécommunication, lorsque des services à valeur ajoutée pilotés par menu (1-5) sont proposés à des abonnés via des canaux radio à bande étroite du système, le dit système de télécommunication comprenant un serveur d'opérateur de télécommunication, prévu pour communiquer avec une pluralité de terminaux téléphoniques mobiles, au moins un serveur de fournisseur de service et des moyens de stockage de données, **caractérisé en ce que**
le dit serveur d'opérateur est prévu pour télécharger un service à valeur ajoutée piloté par menu (1-5), en même temps qu'une identité unique pour le dit service à valeur ajoutée piloté par menu, sur un terminal téléphonique mobile sous la forme d'une structure de données (figure 1), au lieu d'un code exécutable.

18. Procédé selon la revendication 17, **caractérisé en ce que** le dit serveur d'opérateur est prévu pour télécharger un menu de services sur le dit terminal téléphonique mobile sous la forme d'une structure de données (figure 1) au moyen de laquelle une arborescence peut être décrite de façon non ambiguë.

19. Procédé selon la revendication 17 ou la revendication 18, **caractérisé en ce que** le dit système: permet de disposer de:
- une fonction de création d'identités uniques pour tous les services à valeur ajoutée pilotés par menu, et
- un algorithme non ambigu pour application aux dits services à valeur ajoutée pilotés par menu, ce qui résulte **en ce que** différents choix de menu, directement couplés à un appel de service, sont affectés de différentes références de choix de menu (1-5).

20. Procédé selon la revendication 19, **caractérisé par** la représentation des dites références de choix de menu par les branches (1-5) d'une arborescence (figure 1).

21. Procédé selon la revendication 20, **caractérisé par** la fourniture du dit algorithme non ambigu par numérotation des branches (1-5) de la dite arborescence, chacune des dites branches numérotées étant représentative d'un choix séparé des dits choix de menu.

22. Procédé selon une quelconque des revendications 19 à 21, **caractérisé par** le couplage non ambigu d'une identité de menu de service unique, ainsi que d'une référence de choix de menu (1-5), à un appel de service spécifique.

23. Procédé selon une quelconque des revendications 19 à 22, **caractérisé en ce que** le dit serveur d'opérateur envoie un message à la dite fonction lorsqu'un abonné choisit un service à valeur ajoutée (1-5) via une structure de menu dans le terminal téléphonique mobile de l'abonné, la dite fonction ayant accès à des tables de menu (figure 2) pour tous les services à valeur ajoutée proposés par le dit système, et la dite fonction traduisant l'identité de menu de services et la référence de choix de menu (1-5) en un appel de service et exécutant l'appel de service.

24. Procédé selon la revendication 23, **caractérisé en ce qu'**une table de menus de service (figure 2) est prévue pour décrire un couplage entre un choix de menu (1-5) et un appel pour un service associé.

25. Procédé selon une quelconque des revendications 17 à 24, **caractérisé en ce que** les dits moyens de stockage comprennent une base de données de service et une base de données de services personnalisée par les abonnés.

26. Procédé selon une quelconque des revendications 17 à 25, **caractérisé en ce que** le dit au moins un serveur de fournisseur de service est prévu pour fournir de nouveaux services à valeur ajoutée (1-5) pour les abonnés, et pour enregistrer les dits services avec le dit serveur d'opérateur par transmission d'informations décrivant chaque service au dit serveur d'opérateur.

27. Procédé selon la revendication 25, **caractérisé en ce que** le dit système comprend une pluralité de serveurs de fournisseur de service dont chacun est prévu pour fournir et enregistrer un service à valeur ajoutée (1-5)) pour des abonnés.

28. Procédé selon une quelconque des revendications 25 à 27, **caractérisé en ce que** le dit serveur d'opérateur :
- reçoit des données définissant des menus personnalisés d'abonné et des structures de menu ;
- stocke les dits menus et structures de menu sur la dite base de données de service personnalisée par un abonné ; et
- sur demande pour un service par un abonné, télécharge des menus et des structures de menu, spécifiques du dit abonné et du dit service, sur le dit terminal téléphonique mobile du dit abonné.

29. Procédé selon une quelconque des revendications 25 à 28, **caractérisé en ce que** le dit serveur d'opérateur utilise une identité de menu de service, à réception de celle-ci, comme un mot de recherche pour explorer la dite base de données de services personnalisée par un abonné et en extraire une identité de service et des paramètres pour ce service précédemment établis par un abonné.

30. Procédé selon une quelconque des revendications 17 à 29, **caractérisé en ce que** les dits serveurs à valeur ajoutée pilotés par menu sont proposés aux abonnés par diffusion cellulaire.
